# EUROPÄISCHE PATENTANMELDUNG

(11) **EP 2 592 376 A1**
(43) Veröffentlichungstag der Anmeldung: **15.05.2013**
(21) Anmeldenummer: 12007321.8
(22) Anmeldetag: 25.10.2012
(51) Int. Cl.: F41G 7/22, H01L 41/09, H02N 2/16

(54) **Suchkopf für einen Lenkflugkörper**

(30) Priorität: 09.11.2011 DE 102011117923
(71) Anmelder: Diehl BGT Defence GmbH & Co. KG, 88662 Überlingen (DE)
(72) Erfinder: Trapp, Sascha, DE - 88682 Salem (DE); Groß, Michael, DE - 88682 Salem (DE)
(74) Vertreter: Diehl Patentabteilung

(57) **Zusammenfassung**

Die Erfindung geht aus von einem Suchkopf (8) für einen Lenkflugkörper (2) mit einer Kamera (10), die einen Detektor (20) und eine Optik (22) zum Abbilden einer Objektszene (12) auf den Detektor (20) umfasst, und mit einem Antrieb (26), durch den das Gesichtsfeld (24) der Kamera (10) relativ zu einer strukturfesten Richtung zweidimensional verschwenkbar ist.

Ein einfacher und kostengünstiger Suchkopf kann hergestellt werden, wenn der Antrieb (26) um eine Kugel (14) angeordnet ist und zum Bewegen der Kugel (14) relativ zum Antrieb (26) um zumindest zwei Schwenkachsen vorbereitet ist.

## Beschreibung

Die Erfindung betrifft einen Suchkopf für einen Lenkflugkörper mit einer Kamera, die einen Detektor und eine Optik zum Abbilden einer Objektszene auf den Detektor umfasst, und mit einem Abtrieb, durch den das Gesichtsfeld der Kamera relativ zu einer strukturfesten Richtung zweidimensional verschwenkbar ist.

Suchköpfe für Lenkflugkörper enthalten eine abbildende Optik, einen Detektor und eine Bildverarbeitungselektronik zum Auswerten von aufgenommenen Bildern. Ist das Gesichtsfeld der abbildenden Optik beziehungsweise Detektors für eine Anwendung zu gering, ist es bekannt, kardanische Systeme zu verwenden, um durch ein Verschwenken des Gesichtsfeld beziehungsweise einer beweglichen Optikeinheit der Optik um des Strahlengangs einer Veränderung der Richtung des Gesichtsfeld zu erreichen.

Soll die Richtung eines in der Abbildung erkannten Gegenstands bestimmt werden, so kann dessen Richtungsinformation nicht mehr alleine durch die Lage des Gegenstands im Bild ermittelt werden. Zusätzlich müssen die Positionen beziehungsweise die Winkel der beweglichen Elemente der Optik in Bezug auf eine vorbekannte Richtung, beispielsweise eine strukturfeste Richtung, ermittelt werden. Für diese Aufgabe kommen Positions- oder Winkelmesssysteme zum Einsatz. Hierbei können je nach Anwendung optische Abtastungen von Messscheiben, magnetische Messsysteme, Potentiometer, induktive Messsysteme oder kapazitive Messsysteme verwendet werden.

Es ist eine Aufgabe der vorliegenden Erfindung, einen Suchkopf für einen Lenkflugkörper mit einer Kamera anzugeben, deren Gesichtsfeld mit einfachen Mitteln zweidimensional verschwenkt werden kann.

Diese Aufgabe wird durch einen Suchkopf der eingangs genannten Art gelöst, bei dem der Antrieb erfindungsgemäß um eine Kugel angeordnet ist und zum Bewegen der Kugel relativ zum Antrieb um zumindest zwei Schwenkachsen vorbereitet ist. Es kann eine besonders einfache und robuste Kameragestaltung erreicht werden, mit dem das Gesichtsfeld auf einfache Weise zweidimensional verschwenkt werden kann.

Wird der Antrieb nur zum Schwenken der Kugel verwendet, so ist eine Verschwenkbarkeit um zwei Schwenkachsen ausreichend, die beispielsweise mit zwei Antriebselementen erreicht werden kann. Die beiden Antriebselemente treiben die Kugel zweckmäßigerweise um zwei senkrecht zueinander stehende Achsen an, wodurch eine zweidimensionale Verschwenkbarkeit ermöglicht wird. Eine komfortablere Bewegung lässt sich mit drei Antriebselementen erreichen, die die Kugel um drei unterschiedliche Achsen drehbar machen. Gewisse Verschwenkbewegungen können hierdurch vereinfacht werden.

Das Schwenken der Kugel geschieht zweckmäßigerweise relativ zu einem strukturfesten Bauteil zum Beispiel einem Suchkopfgehäuse. Es ist jedoch auch möglich, dass die Kugelstruktur strukturfest gehalten wird und die Kamera auf der Kugel oder in der Kugel läuft zum Verschwenken des Gesichtsfelds der Kamera. Besonders kleinbauend kann der Suchkopf jedoch gehalten werden, wenn der Antrieb strukturfest ist und die Kugel relativ zur strukturfesten Richtung um die zumindest zwei Schwenkachsen drehbar ist.

Einer kompakten Bauweise ist es außerdem förderlich, wenn der Detektor und zumindest ein Teil der abbildenden Optik in der Kugel angeordnet sind. Die Kugel hat zweckmäßigerweise eine Öffnung, in der ein optisches Element der Optik angeordnet sein kann. So kann die Öffnung der Kugel beispielsweise durch eine Linse verschlossen sein, wodurch eine zusätzliche Schutzfunktion des Detektors erreicht wird. Der Detektor ist in der Kugel zweckmäßigerweise gegenüber diesem optischen Element angeordnet.

Eine weitere Ausführungsform der Erfindung sieht vor, dass der Antrieb zumindest drei Antriebseinheiten aufweist, die die Kugel sowohl antreiben, als auch lagern. Hierdurch kann auf zusätzliche Lager verzichtet werden, wodurch Bauteile gespart werden können. Außerdem wirkt sich der Verzicht auf zusätzliche Lager vorteilhaft auf das zu bewegende Gewicht der Kugel aus, da entsprechende Lagerelemente nicht mitbewegt werden müssen. Weiter kann durch den Verzicht auf Lager die Bewegungsfreiheit der Kugel erhöht werden.

Eine besonders vorteilhafte Ausführungsform der Erfindung sieht vor, dass der Antrieb ein sphärischer Ultraschallmotor ist. Ein solcher Ultraschallmotor ist beschrieben in "MRI-Compatibility of a Manipulator using a Sperical Ultrasonic Motor", Proceedings of the 12th IFToMM World Congress, Besancon, Frankreich, 18.-21. Juni 2007. Mit einem solchen Motor kann die Kugel mithilfe von drei identischen Ultraschall-Piezomotoren um drei Achsen geschwenkt werden. Außerdem wird mit einem sphärischen Ultraschallmotor keine Lagerung der Kugel benötigt, da die Ultraschall-Piezomotoren selbst die Lagerung der Kugel leisten. Die Lagerung der Kamera kann daher mit einem einzigen bewegten Teil, nämlich der Kugel bewerkstelligt werden, dessen Masse klein gehalten werden kann. Die Kugel sollte lediglich geeignete Reibeigenschaften aufweisen, um einen zuverlässigen Antrieb durch die drei Piezo-Antriebseinheiten zuverlässig zu gewährleisten.

Eine weitere vorteilhafte Ausführungsform der Erfindung sieht vor, dass der Suchkopf eine Markierungseinrichtung zum Bereitstellen einer Markierung und einen Detektor zum ortsaufgelösten Erfassen einer Position der Markierung umfasst sowie eine Bildverarbeitung zum Bestimmten eines Verschwenkwinkels der Kugel aus der Position der Markierung. Die Erfindung geht hierbei von der Überlegung aus, dass es zur Richtungserfassung eines abgebildeten Objekts notwendig ist, die Ausrichtung des Gesichtsfelds relativ zu einer vorbekannten Richtung zu bestimmen, um den Lenkflugkörper beispielsweise auf das Objekt ausrichten zu können. Zur Bestimmung der Ausrichtung des Gesichtsfelds sind lineare Abgriffe bekannt, die jeweils eine Bewegungsdimension einer beweglichen Optikeinheit erfassen können. Ansätze, bewegliche Optikeinheiten kugelförmig und dem menschlichen Auge entsprechen zu gestalten, müssen das Hindernis überwinden, dass eine frei zweidimensionale Beweglichkeit mit sehr hoher Präzision abgetastet werden muss. Mithilfe der optischen Positionserfassung der Kugel kann die Ausrichtung des Gesichtsfelds präzise und einfach erkannt werden.

Die Markierung ist beispielsweise eine Abschattung oder eine Leuchtmarkierung. Eine Leuchtmarkierung kann durch das gerichtete Ausstrahlen von Strahlung in eine Richtung erzeugt werden. Die Abschattung kann durch ein entsprechendes Abschattungselement erzeugt werden, das insbesondere unmittelbar vor dem Detektor angeordnet sein kann, zweckmäßigerweise in strukturfester Form.

Besonders vorteilhaft ist es, wenn der Suchkopf eine Markierungseinrichtung in Form eines Beleuchtungsmittels zum Aussenden von Strahlung, einen Detektor zum ortsaufgelösten Detektieren der Strahlung und eine Bildverarbeitung zum Bestimmen eines Verschwenkwinkels der Kugel aus der Position der Strahlung auf den Detektor aufweist. Auf diese Weise kann zum Beispiel ein an die Bewegung der Kugel gekoppelter Strahl auf einen Detektor gerichtet werden, so dass ein Verschwenkwinkel direkt durch einen Abgriff des Lichtpunkts auf den Detektor erfasst werden kann. Auch ist es möglich, einen Markierungsstrahl strukturfest zu halten und in die Kugel einzustrahlen, sodass beispielsweise ein Lichtpunkt des Strahls bei einer Bewegung der Kugel in der bewegten Kugel umherwandert. Da die Bewegung des Lichtpunkts in bekannter Relation zur Bewegung der Kugel steht und erfasst werden kann, kann die Bewegung bzw. Ausrichtung der Kugel einfach bestimmt werden.

Gerade in einem solchen Fall, in dem ein Beleuchtungsstrahl verwendet wird, kann das Erkennen einer Rotation der Kugel um eine Achse, die mit dem Beleuchtungsstrahl zusammenfällt, schwierig sein. Insbesondere für einen solchen Fall weist das Beleuchtungsmittel zweckmäßigerweise mehrere Beleuchtungselemente auf zum Aussenden von Strahlen mit unterschiedlichen vorbestimmten Bildeigenschaften. Ist nun die Bildverarbeitung dazu vorbereitet, den Verschwenkwinkel der Kugel aus den unterschiedlichen Bildeigenschaften und den Positionen der Strahlung auf den Detektor zu bestimmen, so kann auch eine wie oben beschriebene Rotation zuverlässig erkannt werden. Außerdem können mit mehreren Beleuchtungselementen große Schwenkwinkel erfasst werden, wenn eine Strahlungsmarkierung eines der Beleuchtungselemente aus der Abbildung beziehungsweise von der Detektorfläche wandert. Bei Vorhandensein mehrerer Markierungen kann stets eine Markierung abgebildet werden beziehungsweise auf den Detektor strahlen.

Eine besonders einfache Form der Verschwenkwinkelerkennung kann dadurch realisiert werden, dass die Markierungseinrichtung an der Kugel und der Detektor außerhalb der Kugel angeordnet ist. Die Markierungseinrichtung kann eine Markierung an der Kugel sein, die der Detektor beziehungsweise die daran angeschlossene Bildverarbeitung optisch erfasst. Bei einer aktiven Markierungseinrichtung kann ein Strahl von der Kugel ausgesendet werden, der mit einer Bewegung der Kugel mitbewegt wird und der auf den Detektor strahlt. Hierdurch kann eine besonders feine und zuverlässige Schwenkwinkelerkennung erfolgen.

Besonders kompakt kann der Suchkopf gehalten werden, wenn er eine Markierungseinrichtung zum Markieren der Abbildung der Objektszene mit zumindest einer Markierung aufweist, deren Ausrichtung im abgebildeten Gesichtsfeld relativ zu einer vorbestimmten, insbesondere strukturfesten Richtung bekannt ist. Die Markierung wird hierbei zweckmäßigerweise durch die die Objektszene abbildende Optik auf den Detektor abgebildet, sodass sie mittels bildverarbeitender Methoden einfach erkannt werden kann. Durch die bekannte vorbestimmte Richtung kann nun die Ausrichtung des Gesichtsfelds bestimmt werden, da die Lage der Markierungen der Abbildungen einfach erfasst werden kann.

Vorteilhafterweise umfasst die Markierungseinrichtung zumindest ein Beleuchtungselement zum Einstrahlen von Strahlung mit einer vorbestimmten Bildeigenschaft aus zumindest einer vorbestimmten Richtung in die Kugel und zweckmäßigerweise auch auf den Detektor. Die vorbestimmte Richtung ist zweckmäßigerweise eine strukturfeste Richtung, die sich also bei einer Bewegung der Kugel relativ zur Kugel und damit relativ zum Gesichtsfeld der Kamera bewegt. Bei einer Bewegung des Gesichtsfelds bewegt sich somit die Markierung, beispielsweise ein Leuchtpunkt, in der Abbildung, wodurch die Bewegung des Gesichtsfelds und deren absolute Lage relativ zur vorbestimmten Richtung einfach erfasst werden kann.

Um eine exakte Abbildung der Markierung auf den Detektor zu gewährleisten, ist es vorteilhaft, wenn die eingestrahlte Strahlung ausschließlich parallel ist. Es kann ein unendlich ferner Gegenstand simuliert werden, der durch die abbildende Optik scharf auf den Detektor wiedergegeben wird.

Der Kompaktheit des Suchkopfs ist es außerdem förderlich, wenn er ein Gehäusefenster aufweist, durch das das Gesichtsfeld der Kamera gerichtet ist und an dem die Markierungseinrichtung angeordnet ist.

Die Markierungseinrichtung kann besonders einfach und kleinbauend gehalten werden, wenn sie ein Auskoppelelement zum Auskoppeln von im Gehäusefenster geführter Strahlung enthält. Sie muss nicht selbst aktiv sein sondern kann die im Gehäusefenster geführte Strahlung auf den Detektor richten. Hierdurch kann die Markierungseinrichtung besonders klein ausgeführt werden, sodass sie das Gesichtsfeld wenig abschattet.

In einer weiteren vorteilhaften Ausführungsform der Erfindung umfasst der Suchkopf eine Bildverarbeitungseinheit, die dazu vorbereitet ist, eine Markierung in einem Bild als solche zu erkennen und aus ihrer Position im Bild eine Winkelinformation der Kugel abzuleiten. Ein einfaches Aufstrahlen von insbesondere punktförmiger Strahlung auf den Detektor ist auch als Abbildung der Markierung auf den Detektor zu verstehen.

Zweckmäßigerweise ist die Bildverarbeitungseinheit dazu vorbereitet, eine Markierung in einem Bild der Objektszene als solche zu erkennen und entsprechend zu verwenden. Mit weiterem Vorteil ist die Bildverarbeitungseinheit dazu vorbereitet, anhand der Position der Markierung im Bild eine Position eines weiteren im Bild abgebildeten Gegenstands relativ zu einer vorgegebenen Richtung zu bestimmen.

Die Erfindung ist außerdem gerichtet auf ein Verfahren zum Abbilden einer Objektszene auf einen Detektor einer Kamera, die eine Optik zum Abbilden einer Objektszene auf den Detektor und einen Antrieb umfasst, durch den das Gesichtsfeld der Kamera relativ zu einer strukturfesten Richtung zweidimensional verschwenkt wird.

Es wird vorgeschlagen, dass der Antrieb erfindungsgemäß um eine Kugel angeordnet ist und er die Kugel relativ zum Antrieb um zumindest zwei Schwenkachsen bewegt. Es kann eine einfache Kamera mit einem verschwenkbaren Gesichtsfeld in einem Suchkopf realisiert werden.

Zweckmäßigerweise wird ein oder werden mehrere der oben beschriebenen Verfahrensschritte zur Bestimmung einer Winkelinformation der Kugel durchgeführt, insbesondere mithilfe einer Prozesseinheit, die eine Bildverarbeitung aufweist.

Die bisher gegebene Beschreibung vorteilhafter Ausgestaltungen der Erfindung enthält zahlreiche Merkmale, die in den einzelnen Unteransprüchen teilweise zu mehreren zusammengefasst wiedergegeben sind. Diese Merkmale wird der Fachmann jedoch zweckmäßigerweise auch einzeln betrachten und zu sinnvollen weiteren Kombinationen zusammenfassen. Insbesondere sind diese Merkmale jeweils einzeln und in beliebiger geeigneter Kombination mit der erfindungsgemäßen Vorrichtung und dem erfindungsgemäßen Verfahren der unabhängigen Ansprüche kombinierbar.

Weitere Vorteile ergeben sich aus der folgenden Zeichnungsbeschreibung. In der Zeichnung sind Ausführungsbeispiele der Erfindung dargestellt, die der Erläuterung der Erfindung dienen. Die Erfindung ist jedoch nicht auf die darin angegebene Kombination von Merkmalen beschränkt, auch nicht in Bezug auf funktionale Merkmale. So können dazu geeignete Merkmale eines jeden Ausführungsbeispiels auch explizit isoliert betrachtet, aus einem Ausführungsbeispiel entfernt, in ein anderes Ausführungsbeispiel zu dessen Ergänzung eingebracht und/oder mit der erfindungsgemäßen Vorrichtung und dem erfindungsgemäßen Verfahren der unabhängigen Ansprüche kombiniert werden.

Es zeigen:
- Fig. 1: eine schematische Abbildung eines Lenkflugkörpers mit einem Suchkopf mit einer kugelförmigen Kamera,
- Fig. 2: die Kamera des Suchkopfs aus Fig. 1 mit Antriebseinheiten in einer teilgeschnittenen Ansicht,
- Fig. 3: eine Zeichnung zur Darstellung der Wirkensweise der Antriebselemente aus Fig. 2,
- Fig. 4: den Suchkopf aus Fig. 1 mit Beleuchtungselementen in einer weiteren schematischen Darstellung und
- Fig. 5: einen alternativen Suchkopf mit einem alternativen Beleuchtungselement.

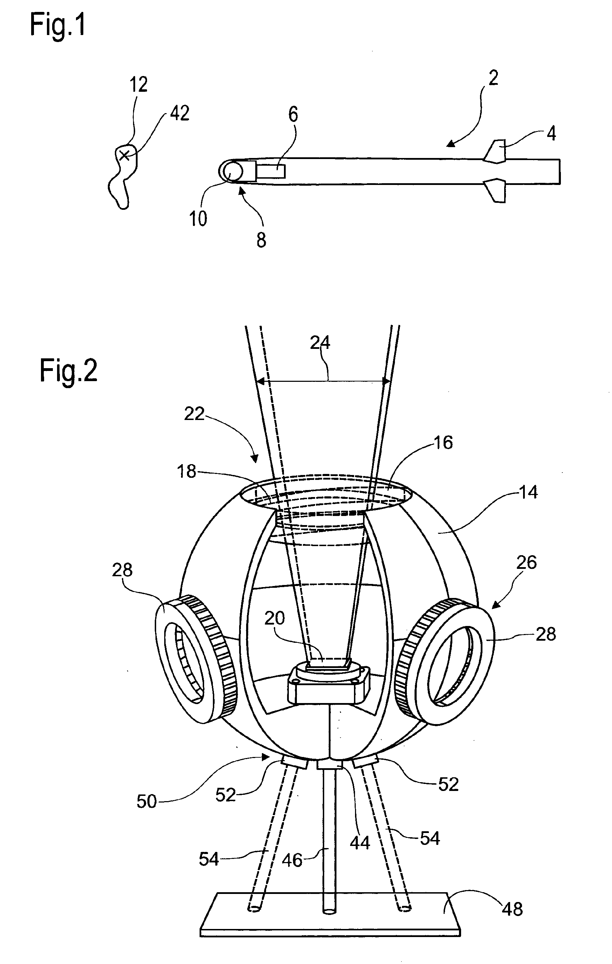

Fig. 1 zeigt einen Flugkörper 2, beispielsweise eine Artillerierakete oder eine Luft-Luft-Abwehrrakete. Der Flugkörper 2 ist ein Lenkflugkörper mit Flügeln 4, die von einer Prozesseinheit 6 angesteuert werden und durch die der Flugkörper 2 in seinem Flug auf ein Ziel zugelenkt wird. Der Flugkörper 2 ist an seiner Spitze mit einem Suchkopf 8 ausgerüstet, in dem eine Kamera 10 zum Abbilden einer Objektszene 12 auf einen Detektor enthält.

Die Kamera 10 ist mit einem kugelförmigen Gehäuse 14 ausgestattet, das in Fig. 2 detaillierter dargestellt ist. Das kugelförmige Gehäuse 14 weist nach vorne hin eine Öffnung 16 auf, in der optische Elemente 18, beispielsweise Linsen, einer Optik 22 zum Abbilden der Objektszene 12 auf den Detektor 20 der Kamera 10 angeordnet sind. Der Detektor 20 ist im Inneren des kugelförmigen Gehäuses 14 platziert und so ausgerichtet, dass sein Gesichtsfeld 24 durch die Optik 22 in die Objektszene 12 gerichtet ist.

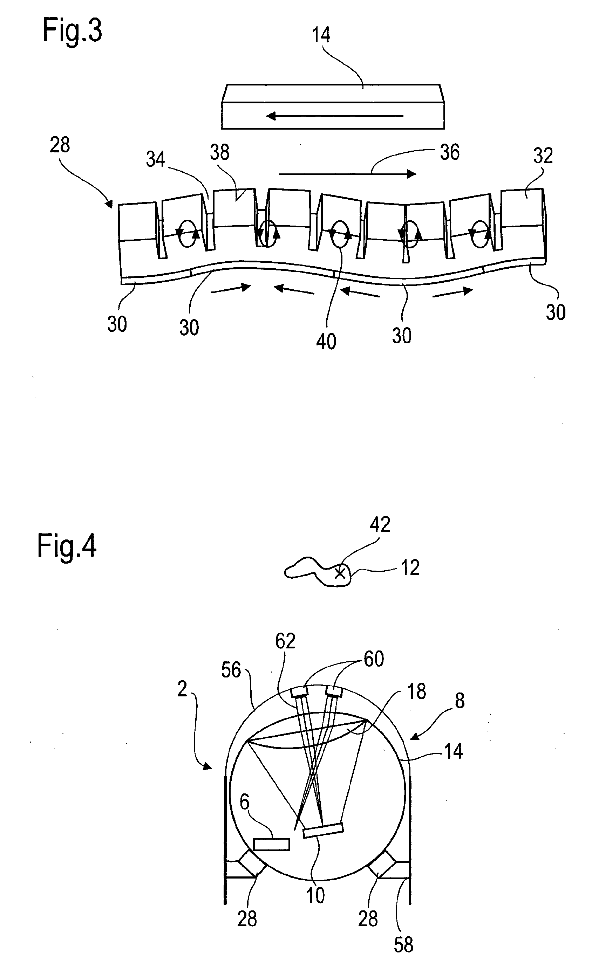

Das kugelförmige Gehäuse 14, im Folgenden auch nur als Kugel 14 bezeichnet, ist durch einen Antrieb 26 mit drei Antriebselementen 28 im Suchkopf 8 gelagert. Die Antriebselemente 28, von denen in Fig. 2 nur zwei sichtbar sind, da das dritte Antriebselement sich in der dargestellten Perspektive hinter der Kugel 14 befindet, sind strukturfest gelagert, also beispielsweise starr relativ zu einem Suchkopfgehäuse angeordnet. Sie bilden zusammen einen sphärischen Ultraschallmotor. Zur Erläuterung der Wirkensweise des sphärischen Ultraschallmotors sei auf Fig. 3 verwiesen.

Jedes Antriebselement 28 ist mit einer Anzahl Piezoelementen 30 bestückt, die beispielsweise auf ein Transportband 32 geklebt sind, das mit mehreren Einschnitten 34 versehen ist. Das Transportband 32 ist aus einem genügend elastischen Material gefertigt, dass es sich verformen kann, wie in Fig. 3 dargestellt ist. Die Piezoelement 30 werden in der Weise angesteuert, dass sich ein Piezoelement 30 ausdehnt und seine beiden benachbarten Piezoelemente 30 zusammenziehen. Die Kontraktion und Expansion ist durch vier Pfeile unterhalb der Piezoelemente 30 angedeutet. Durch die feste Verbindung mit dem Transportband 32 wird hierdurch dem Transportband 32 eine Wellenform aufgezwungen, wie in Fig. 3 dargestellt ist.

Die Piezoelemente 30 werden nun von der Prozesseinheit 6 so angesteuert, dass sich die Welle durch das Transportband 32 bewegt, wie durch den Pfeil 36 angedeutet ist. Solche wandernde Wellen laufen nun kreisförmig durch das Antriebselement 28. Jeder beliebige Punkt auf der Oberfläche 38 des entsprechenden Antriebselements 28 durch läuft hierdurch eine elliptische Bewegung, die durch die Pfeile 40 angedeutet ist. Wenn also Wechselspannung an die piezoelektrischen Elemente 30 angelegt wird, weiten sie sich oder ziehen sie sich zusammen entsprechend ihrer Polrichtung. Dies erzeugt eine stationäre Welle. Wandernde Wellen werden durch die Überlagerung von zwei stationären Wellen erzeugt, die verschoben zueinander sind und eine Phasendifferenz aufweisen. Die Superposition der zwei stationären Wellen erzeugt die wandernde Welle an der Oberfläche 38 des Antriebselements 28.

Jedes Antriebselement 28 greift nun mit seiner Oberfläche 38 an die Oberfläche der Kugel 14. Hierbei sind die Antriebselemente 28 leicht gegen die Kugel 14 vorgespannt. Die elliptische Bewegung der Oberfläche überträgt sich durch Reibung auf die Oberfläche der Kugel, sodass die Kugel 14 in eine Drehung versetzt wird. In der Fig. 3 ist diese Bewegung der Kugel gegenläufig zu der Bewegung der Welle.

Betrachtet man die von jedem einzelnen Antriebselement 28 erzeugte Drehbewegung als Vektor, so können diese drei Vektoren als Gesamtdrehung überlagert werden. Durch die Anordnung der Vektoren, sie sind zweckmäßigerweise linear unabhängig, kann durch die Überlagerung der drei Drehbewegungen der Kugel 14 erzeugt werden. Es kann somit die resultierende Drehachse beliebig gewählt werden, sodass das Gesichtsfeld 24 in eine beliebige Richtung verschwenkt werden kann.

Die Antriebselemente 28 übertragen die Drehbewegung auf die Kugel durch Reibung. Hierzu müssen sie mit einer gewissen Kraft auf die Kugel gedrückt werden. Durch die Andruckkraft und die runde Form der Antriebselemente 28 wird die Kugel 14 nicht nur angetrieben sondern auch gehalten. Diese Haltung ist zentriert, sodass eine separate Lagerung der Kugel 14 damit entfallen kann. Die Antriebselemente 28 dienen somit zugleich als Lagerelemente.

Durch diese Konstruktion muss lediglich die Kugel 14 bewegt werden, sodass die bewegte Masse klein gehalten werden kann. Es ergibt sich somit eine stark vereinfachte Konstruktion durch den Wegfall einer separaten Lagerung. Außerdem werden nur geringe Anforderungen an die Konstruktion in Bezug auf Fertigungstoleranzen gestellt. Weiter ist mit diesem Aufbau eine Drehung um drei Achsen möglich. Dieses Konzept sehr leicht, kompakt und preisgünstig.

Zum Erfassen einer Richtung vom Suchkopf 8 zu einem Objekt 42 in der Objektszene 12 relativ zu einer vorbestimmten Ausrichtung, beispielsweise eine Richtung parallel zur Längsachse des Flugkörpers 2 oder zu einer anderen strukturfesten Richtung, kann folgendes Verfahren angewandt werden.

Mittels einer Bildverarbeitung, die in Form von Software in einem Speicher der Prozesseinheit 6 gespeichert ist und die von einem Prozessor der Prozesseinheit 6 abgearbeitet wird, wird das Objekt 42 in der Abbildung der Objektszene 12 nach vorgegebenen Kriterien als solches erkannt. Nun wird die Lage der Abbildung des Objekts 42 in der gesamten Abbildung auf dem Detektor 20 erfasst. Außerdem wird die Ausrichtung des Gesichtsfelds 42 in die Objektszene 12 beziehungsweise Umgebung relativ zu der vorbestimmten Richtung bestimmt. Hierzu bestehen mehrere Möglichkeiten.

Eine Möglichkeit besteht darin, die Hinterseite der Kugel 14 mit einer Markierung zu versehen, beispielsweise zu bemalen. Eine auf der Hinterseite der Kugel 14 gerichtete Kamera erfasst die Lage der Markierung relativ zur Ausrichtung der Kamera, wodurch eine Verschwenkung, also ein Verschwenkwinkel und eine Verschwenkrichtung, einfach bestimmt werden kann.

Eine weitere Möglichkeit verwendet eine Markierungseinrichtung 44 in Form eines Beleuchtungsmittels beziehungsweise Beleuchtungselements, das einem Lichtstrahl 46, beispielsweise einen Laserstrahl, auf einen strukturfesten Detektor 48 richtet. Die Position des durch den Lichtstrahl 46 erzeugten Lichtpunkts auf den Detektor 48 steht in einer eindeutigen Beziehung zur Verschwenkung der Kugel 14.

Um auch ein Drehung der Kugel 14 um die Achse des Lichtstrahls 46 zu erfassen, ist es sinnvoll, eine Markierungseinrichtung 50 mit mehreren Beleuchtungselementen 52 vorzusehen. Auch diese können jeweils einen Lichtstrahl 54 aussenden, deren Auftreffpunkt auf den Detektor 48 in einer eindeutigen Beziehung zur Verschwenkung der Kugel 14 steht. Ein Verdrehen oder Verschwenken um jede Achse kann so erkannt werden. Außerdem hat diese Methode den Vorteil, dass ein sehr großer Verschwenkwinkel erfasst werden kann, bei dem beispielsweise ein Lichtstrahl 54 aus dem Detektor 48 auswandert. Die Lichtstrahlen 54 beziehungsweise die Beleuchtungselement 52 sollten hierbei so angeordnet sein, dass bei jedem möglichen Verschwenkwinkel zumindest ein Lichtstrahl 54, zweckmäßigerweise zumindest zwei Lichtstrahlen 54, auf den Detektor 48 gerichtet sind.

Eine dritte Möglichkeit zur Bestimmung der Verschwenkung der Kugel 14 ist in Fig. 4 schematisch angedeutet. Der Suchkopf 8 ist hinter einem Dom 56 des Flugkörpers 2 angeordnet. Die Prozesseinheit 6 ist in diesem Ausführungsbeispiel innerhalb der Kugel 14 angeordnet. Die Antriebselement 28 sind fest mit einem Gehäuse 58 des Flugkörpers 2 verbunden.

Am Dom 56 sind zwei Beleuchtungselemente 60 angeordnet, indem sie am Dom 56 befestigt sind, beispielsweise angeklebt sind. Die nachfolgende Beschreibung beschränkt sich im Wesentlichen auf die Unterschiede zum Ausführungsbeispiel aus Fig. 2, auf das bezüglich gleichbleibender Merkmale und Funktionen verwiesen wird. Im Wesentlichen gleichbleibenden Bauteile sind grundsätzlich mit den gleichen Bezugszeichen beziffert und nicht erwähnt Merkmale sind in den folgenden Ausführungsbeispielen übernommen, ohne dass sie erneut beschrieben sind.

Die Beleuchtungselemente 6 senden jeweils einen Lichtstrahl 62 in die Optik 22. Der Lichtstrahl 62 ist parallel, sodass die Abbildung eines unendlich fernen Gegenstands simuliert wird. Durch die Optik 22 wird der Lichtstrahl 62 auf den Detektor 20 gelenkt. Er trifft dort punktförmig auf, sodass seine Lage auf dem Detektor 20 einfach zu bestimmen ist. Die Ausrichtung der Lichtstrahlen 62 ist strukturfest. Bei einer Bewegung der Kugel 14 wandert der abgebildete Lichtpunkt allerdings über den Detektor 20 und verändert so seine Position auf den Detektor 20.

Bei dem in Fig. 4 gezeigten Ausführungsbeispiel ist die Kugel 14 leicht nach links verkippt. Der Lichtstrahl des linken Beleuchtungselements 60 liegt mittig auf dem Detektor 20, während der Lichtstrahl 62 des rechten Beleuchtungselements 60 aus der Detektorfläche ausgewandert ist, sodass das Beleuchtungselement 60 beziehungsweise dessen Beleuchtungsquelle nicht mehr auf dem Detektor 20 abgebildet ist. Aus der Lage der Abbildungen der Beleuchtungselemente 60 beziehungsweise von deren Lichtquellen kann nun in einfacher Weise auf die Verschwenkung der Kugel 14 rückgerechnet werden, weil die Lage in einer eindeutigen Beziehung zur Ausrichtung der Kugel 14 beziehungsweise von deren Gesichtsfeld 24 in die Objektszene 12 abhängt.

Die beiden Beleuchtungselemente 60 sind nur beispielhaft dargestellt. Verallgemeinert ist selbstverständlich ein Feld mit n x m Beleuchtungselementen 60 vorteilhaft, wobei n = m sein kann. Gerade bei sehr großen Verschwenkwinkeln ist ein größeres Feld von Beleuchtungselementen 60 zweckmäßig.

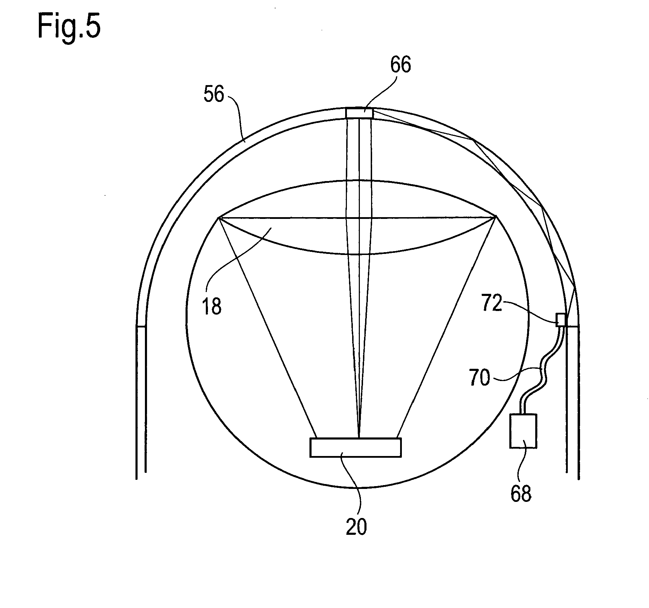

Eine weitere Ausführungsform der Erfindung ist in Fig. 5 dargestellt. Es ist eine Markierungseinrichtung 64 in Form von einem oder mehreren Lichtauskoppelelementen 66 im Dom 56 vorhanden. Die Anzahl und die Anordnung der Auskoppelelemente 66, von denen in Fig. 5 nur eines der Übersichtlichkeit halber dargestellt ist, ist an die Größe des Gesichtsfeld 24 und an den Verschwenkwinkelbereich anzupassen. Mithilfe eines Strahlungserzeugers 68 wird Strahlung erzeugt, die durch einen Lichtleiter 70 an ein Einkoppelelement 72 weitergeleitet wird. Dieses koppelt die Strahlung in den Dom 56 des Suchkopfs 8, sodass sie von dort an das beziehungsweise die Auskoppelelemente 66 der Markierungseinrichtung 64 gelangt. Dort wird die Strahlung aus dem Dom 56 ausgekoppelt und in die Optik 22 gerichtet, sodass sie gebündelt in einem Punkt auf den Detektor 20 fällt. Das Wirkprinzip der Strahlung ist gleich dem wie zuvor beschrieben.

Bei der Verwendung von mehreren Beleuchtungselementen 60 sollte die von diesem ausgesendete Strahlung unterschiedliche Bildeigenschaften aufweisen, beispielsweise sollte jedes Beleuchtungselement 60 mit einer eigenen Frequenz oder Form abstrahlen. Das gleiche gilt selbstverständlich auch für die Markierungseinrichtung 64, wobei hier die Form der Auskoppelelemente unterschiedlich gewählt werden kann, sodass unterschiedliche Formen auf den Detektor 20 abgebildet werden. Es ist auch möglich, zeitliche Signale zu senden, sodass die Beleuchtungselemente 60 bei beispielsweise gleicher Frequenz und Form anhand einer speziellen Strahlungssequenz erkannt werden kann, die auch als Bildeigenschaft bezeichnet wird.

### Bezugszeichenliste

- 2: Flugkörper
- 4: Flügel
- 6: Prozesseinheit
- 8: Suchkopf
- 10: Kamera
- 12: Objektszene
- 14: kugelförmiges Gehäuse
- 16: Öffnung
- 18: Element
- 20: Detektor
- 22: Optik
- 24: Gesichtsfeld
- 26: Antrieb
- 28: Antriebselement
- 30: Piezoelement
- 32: Transportband
- 34: Einschnitt
- 36: Pfeil
- 38: Oberfläche
- 40: Pfeil
- 42: Objekt
- 44: Markierungseinrichtung
- 46: Lichtstrahl
- 48: Detektor
- 50: Markierungseinrichtung
- 52: Beleuchtungselement
- 54: Lichtstrahl
- 56: Dom
- 58: Gehäuse
- 60: Beleuchtungselement
- 62: Lichtstrahl
- 64: Markierungseinrichtung
- 66: Auskoppelelemente
- 68: Strahlungserzeuger
- 70: Lichtleiter
- 72: Einkoppelelement

## Patentansprüche

1. Suchkopf (8) für einen Lenkflugkörper (2) mit einer Kamera (10), die einen Detektor (20) und eine Optik (22) zum Abbilden einer Objektszene (12) auf den Detektor (20) umfasst, und mit einem Antrieb (26), durch den das Gesichtsfeld (24) der Kamera (10) relativ zu einer strukturfesten Richtung zweidimensional verschwenkbar ist,
**dadurch gekennzeichnet,**
**dass** der Antrieb (26) um eine Kugel (14) angeordnet ist und zum Bewegen der Kugel (14) relativ zum Antrieb (26) um zumindest zwei Schwenkachsen vorbereitet ist.

2. Suchkopf (8) nach Anspruch 1,
**dadurch gekennzeichnet,**
**dass** der Antrieb (26) strukturfest ist und die Kugel (14) relativ zur strukturfesten Richtung um die zumindest zwei Schwenkachsen drehbar ist.

3. Suchkopf (8) nach Anspruch 1 oder 2,
**dadurch gekennzeichnet,**
**dass** der Detektor (20) und zumindest ein Teil der abbildenden Optik (22) in der Kugel (14) angeordnet sind.

4. Suchkopf (8) nach einem der vorhergehenden Ansprüche,
**dadurch gekennzeichnet,**
**dass** der Antrieb (26) zumindest drei Antriebseinheiten (28) aufweist, die die Kugel (14) sowohl antreiben, als auch lagern.

5. Suchkopf (8) nach einem der vorhergehenden Ansprüche,
**dadurch gekennzeichnet,**
**dass** der Antrieb (26) ein sphärischer Ultraschallmotor ist.

6. Suchkopf (8) nach einem der vorhergehenden Ansprüche,
**gekennzeichnet**
**durch** eine Markierungseinrichtung (44, 50, 64) zum Bereitstellen einer Markierung und einen Detektor (20) zum ortsaufgelösten Erfassen einer Position der Markierung und einer Bildverarbeitung zum Bestimmen eines Verschwenkwinkels der Kugel (14) aus der Position der Markierung.

7. Suchkopf (8) nach einem der vorhergehenden Ansprüche,
**gekennzeichnet**
**durch** eine Markierungseinrichtung (44, 50, 64) in Form eines Beleuchtungsmittels zum Aussenden von Strahlung, einen Detektor zum ortsaufgelösten Detektieren der Strahlung und eine Bildverarbeitung zum Bestimmen eines Verschwenkwinkels der Kugel aus der Position der Strahlung auf dem Detektor.

8. Suchkopf (8) nach Anspruch 7,
**dadurch gekennzeichnet,**
**dass** das Beleuchtungsmittel mehrere Beleuchtungselemente umfasst zum Aussenden von Strahlung mit unterschiedlichen vorbestimmen Bildeigenschaften, wobei die Bildverarbeitung dazu vorbereitet ist, den Verschwenkwinkel der Kugel aus den Bildeigenschaften und der Position der Strahlung auf dem Detektor zu bestimmen.

9. Suchkopf (8) nach Anspruch 7 oder 8
**dadurch gekennzeichnet,**
**dass** die Markierungseinrichtung (44, 50) an der Kugel angeordnet ist und der Detektor außerhalb der Kugel angeordnet ist.

10. Suchkopf (8) nach einem der vorhergehenden Ansprüche,
**gekennzeichnet**
**durch** eine Markierungseinrichtung (44, 50, 64) zum Markieren der Abbildung der Objektszene mit zumindest einer Markierung, deren Ausrichtung im abgebildeten Gesichtsfeld relativ zu einer vorbestimmten Richtung bekannt ist.

11. Suchkopf (8) nach Anspruch 10,
**dadurch gekennzeichnet,**
**dass** die Markierungseinrichtung (44, 50, 64) zumindest ein Beleuchtungselement (52, 60) umfasst zum Einstrahlen von Strahlung mit einer vorbestimmen Bildeigenschaft aus zumindest einer vorbestimmten Richtung in die Kugel (14).

12. Suchkopf (8) nach Anspruch 11,
**dadurch gekennzeichnet,**
**dass** die eingestrahlte Strahlung ausschließlich einen parallelen Strahlengang aufweist.

13. Suchkopf nach einem der Ansprüche 6 bis 12,
**gekennzeichnet**
**durch** ein Gehäusefenster (56), durch das das Gesichtsfeld der Kamera (10) gerichtet ist und an dem die Markierungseinrichtung (64) angeordnet ist.

14. Suchkopf (8) nach Anspruch 13,
**dadurch gekennzeichnet,**
**dass** die Markierungseinrichtung (64) ein Auskoppelelement zum Auskoppeln von im Gehäusefenster (56) geführter Strahlung enthält.

15. Suchkopf (8) nach einem der vorhergehenden Ansprüche,
**gekennzeichnet**
**durch** eine Bildverarbeitungseinheit, die dazu vorbereitet ist, eine Markierung in einem Bild der Objektszene (12) als solche zu erkennen und anhand der Position der Markierung im Bild eine Position eines weiteren im Bild abgebildeten Gegenstands (42) relativ zu einer vorgegebenen Richtung zu bestimmen.

16. Verfahren zum Abbilden einer Objektszene (12) auf einen Detektor (20) einer Kamera (10), die eine Optik (22) zum Abbilden einer Objektszene (12) auf den Detektor (20) und einen Antrieb (26) umfasst, durch den das Gesichtsfeld (24) der Kamera (10) relativ zu einer strukturfesten Richtung zweidimensional verschwenkt wird,
**dadurch gekennzeichnet,**
**dass** der Antrieb (26) um eine Kugel (14) angeordnet ist und er die Kugel (14) relativ zum Antrieb (26) um zumindest zwei Schwenkachsen bewegt.
